# EUROPEAN PATENT SPECIFICATION

(11) **EP 1 057 191 B1**
(45) Date of publication and mention of the grant of the patent: **20.11.2002**
(21) Application number: 99908009.6
(22) Date of filing: 22.02.1999
(51) Int. Cl.: H01B 3/44, C08F 255/02, C08F 8/00

(54) **AN ELECTRIC DIRECT CURRENT CABLE**
EIN ELEKTRISCHES D.C.-KABEL
CABLE ELECTRIQUE DE COURANT CONTINU

(30) Priority: 25.02.1998 SE 9800567
(43) Date of publication of application: 06.12.2000
(73) Proprietor: ABB AB, 721 83 Västeras (SE)
(72) Inventor: CARSTENSEN, Peter, S-141 42 Huddinge (SE); GUSTAFSSON, Anders, S-441 31 Alingsas (SE); FARKAS, Andreas, S-444 41 Stenungsund (SE); ERICSSON, Anders, S-371 39 Karlskrona (SE); BOSTRÖM, Jan-Ove, S-444 96 Ödsmal (SE); GUSTAFSSON, Bill, S-444 41 Stenungsund (SE); NILSSON, Ulf, S-444 60 Stora Höga (SE); CAMPUS, Alfred, CH-1262 Eysins (CH)
(74) Representative: Lindgren, Anders
(86) International application number: SE9900241
(87) International publication number: WO99044207

(56) References cited:
- EP-A- 0 276 111
- EP-A- 0 315 718
- EP-A- 0 780 509
- WO-A-97/45465
- WO-A-98/34236
- DE-A- 4 134 347
- US-A- 4 234 624
- PATENT ABSTRACTS OF JAPAN vol. 002, no. 031 (C-004), 27 February 1978 & JP 52 126495 A (SUMITOMO CHEM CO LTD), 24 October 1977
- PATENT ABSTRACTS OF JAPAN vol. 014, no. 151 (E-0906), 22 March 1990 & JP 02 010610 A (TOKYO ELECTRIC POWER CO INC:THE;OTHERS: 01), 16 January 1990 cited in the application

## Description

### TECHNICAL FIELD

The present invention relates to an electric direct current cable, a DC-cable, having an insulation system comprising a polyethylene composition, PE. The polyethylene composition is an extruded and cross-linked PE composition, an XLPE composition. The present invention relates in particular to an insulated electric DC cable for transmission and distribution of electric power. The insulation system comprises a plurality of layers, such as an inner semi-conductive shield, an extruded insulation and an outer semi-conductive shield.

At least the extruded insulation comprises a cross-linked polyethylene based electrically insulating composition with a system of additives typically comprising cross-linking agent, scorch retarding agent and anti-oxidant.

### BACKGROUND ART

Although many of the first electrical supply systems for transmission and distribution of electrical power were based on DC technology, these DC systems were rapidly superseded by systems using alternating current, AC. The AC systems had the desirable feature of easy transformation between generation, transmission and distribution voltages. The development of modern electrical supply systems in the first half of this century was exclusively based on AC transmission systems. However, by the 1950s there was a growing demand for long transmission schemes and it became clear that in certain circumstances there could be benefits by adopting a DC based system. The foreseen advantages include a reduction of problems typically encountered in association with the stability of the AC-systems, a more effective use of equipment as the power factor of the system is always unity and an ability to use a given insulation thickness or clearance at a higher operating voltage. Against these very significant advantages has to be weighed the high cost of the terminal equipment for conversion of the AC to DC and for inversion of the DC back again to AC. However, for a given transmission power, the terminal costs are constant and therefore, DC transmission systems were rendered economical for the schemes involving long distances. Thus DC technology becomes economical for systems intended for transmission over long distances as for when the transmission distance typically exceed the length for which the savings in the transmission equipment exceeds the cost of the terminal plant.

An important benefit of DC operation is the virtual elimination of dielectric losses, thereby offering a considerable gain in efficiency and savings in equipment. The DC leakage current is of such small magnitude that it can be ignored in current rating calculations, whereas in AC cables dielectric losses cause a significant reduction in current rating. This is of considerable importance for higher system voltages. Similarly, high capacitance is not a penalty in DC cables. A typical DC-transmission cable include a conductor and an insulation system comprises a plurality of layers, such as an inner semi-conductive shield, an insulation base body and an outer semi-conductive shield. The cable is also complemented with casing, reinforcement etc to withstand water penetration and any mechanical wear or forces during, production installation and use.

Almost all the DC cable systems supplied so far have been for submarine crossings or the land cable associated with them. For long crossings the mass-impregnated solid paper insulated type cable is chosen because there are no restrictions on length due to pressurizing requirements. It has been supplied for operating voltages of 450 kV. To date an essentially all paper insulation body impregnated with a electric insulation oil has been used but application of laminated material such as a polypropylene paper laminate is being persued for use at voltages up to 500 kV to gain advantage of the increased impulse strength and reduced diameter.

As in the case of AC transmission cables, transient voltages is a factor that has to be taken into account when determining the insulation thickness of DC cables. It has been found that the most onerous condition occurs when a transient voltage of opposite polarity to the operating voltage is imposed on the system when the cable is carrying full load. If the cable is connected to an overhead line system, such a condition usually occurs as a result of lightning transients.

Extruded solid insulation based on a polyethylene, PE, or a cross linked polyethylene, XLPE, has for almost 40 years been used for AC transmission and distribution cable insulation. Therefore the possibility of the use of XLPE and PE for DC cable insulation has been under investigation for many years. Cables with such insulations have the same advantage as the mass impregnated cable in that for DC transmission there are no restrictions on circuit length and they also have a potential for being operated at higher temperatures. In the case of XLPE, 90°C instead of 50°C for conventional DC-cables. Thus offering a possibility to increase the transmission load. However, it has not been possible to obtain the full potential of these materials for full size cables. It is believed that one of the main reasons being the development and accumulation of space charges in the dielectric when subjected to a DC-field. Such space charges distort the electrical stress distribution and persist for long periods because of the high resistivity of the polymers. Space charges in an insulation body do when subjected to the forces of an electric DC-field accumulate in a way that a polarized pattern similar to a capacitor is formed. There are two basic types of space charge accumulation patterns, differing in the polarity of the space charge accumulation. The space charge accumulation results in a local increase at certain points of the actual electric field in relation to the field, which would be contemplated when considering the geometrical dimensions and dielectric characteristics of an insulation. The increase noted in the actual field might be 5 or even 10 times the contemplated field. Thus the design field for a cable insulation must include a safety factor taking account for this considerably higher field resulting in the use of thicker and/or more expensive materials in the cable insulation. The build up of the space charge accumulation is a slow process, therefore this problem is accentuated when the polarity of the cable after being operated for a long period of time at same polarity is reversed. As a result of the reversal a capacity field is superimposed on the field resulting from the space charge accumulation and the point of maximal field stress is moved from the interface and into the insulation. Attempts have been made to improve the situation by the use of additives to reduce the insulation resistance without seriously affecting other properties. To date it has not been possible to match the electrical performance achieved with the impregnated paper insulated cables and no commercial polymeric insulated DC cables have been installed. However, successful laboratory tests have been reported on a 250 kV cable with a maximum stress of 20 kV/mm using XLPE insulation with mineral filler (Y.Maekawa et al, Research and Development of DC XLPE Cables, JiCable'91, pp. 562- 569). This stress value compares with 32 kV/mm used as a typical value for mass-impregnated paper cables.

An extruded resin composition for AC cable insulation typically comprises a polyethylene resin as the base polymer complemented with various additives such as a peroxide cross-linking agent, a scorch retarding agent and an anti-oxidant or a system of antioxidants. In the case of an extruded insulation the semi-conductive shields are also typically extruded and comprise a resin composition that in addition to the base polymer and an electrically conductive or semi-conductive filler comprises essentially the same type of additives. The various extruded layers in an insulated cable in general are often based on a polyethylene resin. Polyethylene resin means generally and in this application a resin based on polyethylene or a copolymer of ethylene, wherein the ethylene monomer constitutes a major part of the mass. Thus polyethylene resins may be composed of ethylene and one or more monomers which are co-polymerisable with ethylene. LDPE, low density polyethylene, is today the predominant insulating base material for AC-cables. To improve the physical properties of the extruded insulation and its capability to withstand degradation and decomposition under the influence of the conditions prevailing under production, shipment, laying, and use of such a cable the polyethylene based composition typically comprises additives such as;
- stabilizing additives, e.g. antioxidants, electron scavengers to counteract decomposition due to oxidation; radiation etc.;
- lubricating additives, e.g. stearic acid, to increase processability;
- additives for increased capability to withstand electrical stress, e.g. an increased water tree resistance , e.g. polyethylene glycol, silicones etc.; and
- cross-linking agents such as peroxides, which decompose upon heating into free radicals and initiate cross-linking of the polyethylene resin, sometimes used in combination with
- unsaturated compounds having the ability to enhance the cross-linking density;
- scorch retarders to avoid premature cross-linking.

The number of various additives is large and the possible combinations thereof is essentially unlimited. When selecting an additive or a combination or group of additives the aim is that one or more properties shall be improved while others shall be maintained or if possible also improved. However, in reality it is always next to impossible to forecast all possible side effects of a change in the system of additives. In other cases the improvements sought for are of such dignity that some minor negative have to be accepted, although there is always an aim to minimize such negative effects.

A typical polyethylene based resin composition to be used as an extruded, cross-linked insulation in an AC-cable comprises:
97,1 - 98,9 % by weight of low density polyethylene (922 kg/m³) of melt flow rate 0,4 - 2,5 g/10 min with a system of additives as described in the forgoing.
These additives can comprise:
0,1 - 0,5 % by weight of an antioxidant, such as but not limited to SANTONOX R® (Flexsys Co) with the chemical designation 4,4'-thio-bis(6-tert-butyl-m-cresol), and
1,0- 2,4 % by weight of a cross linking agent such as but not limited to , DICUP R® (Hercules Chem) with the chemical designation dicumyl peroxide.
Although some disadvantages with the use such an XLPE composition have been known for a long time its advantages, e.g. its ability to prevent scorch i.e. premature cross linking, have outweighed these drawbacks. Furthermore it is well known that this type of XLPE composition exhibits a strong tendency to form space charges under DC electric fields, thus making it unusable in insulation systems for DC cables. However, it is also known that extended degassing ,i.e. exposing the cross linked cable insulation at high temperatures to a high vacuum for long periods of time, will result in a somewhat decreased tendency to space charge accumulation under DC voltage stress. It is generally believed that the vacuum treatment removes the peroxide decomposition products, such as "acetophenone" and "cumyl alcohol", from the insulation whereby the space charge accumulation is reduced. Degassing is a time-consuming batch-process comparable with impregnation of paper insulations and thus as costly. Therefore it is advantageous if the need for degassing is removed. Most known cross-linked polyethylene compositions used as extruded insulation in AC-cable exhibit a tendency for space charge accumulation which renders them unsuitable for use in insulation systems for DC-cables.

It is known to add low amounts of an additive comprising carbonyl groups to a LDPE for the dual purpose of increasing resistivity and decreasing space charge accumulation. Such addition of carbonyl is accomplished either by oxidizing polyethylene or by a co-polymerization of carbon monoxide with ethylene. The carbonyl groups are believed to act as trap sites for space charges, whereby the mobility of any space charges is restricted and the development of a polarized pattern within the cross-linked insulation as a result of space charge accumulation when the insulation is subjected to a DC-field. However a tendency for detrapping and thereby an increased space charge accumulation has been noted at elevated temperatures, e.g. temperatures above about 40°C. Also additives in the form of organic acids and anhydrides have shown to give similar effects. Further molar modifications of the polyethylene has been suggested by introduction of polar units into the polymer to obtain a higher DC-breakdown strength. For example Japanese Patent Publication JP-A-210610 reports that an anhydride such as Maleic Acid Anydride, MAH, have been grafted onto the polyethylene for this purpose. The resulting cross-linked insulation material exhibited a decrease in space charge accumulation attributed to the increased polarity of the cross-linked polymer chain structure and it was concluded that the grafted MAH groups, which are fixed within the cross-linked structure, acts as trap sites for any space charges. In JP-A-210610 it was reported that cross-linked polyethylene with additions of MAH at levels corresponding to from about 0.02 to about 0.5 % by weight resulted in cross-linked composition suitable for use as insulation in a DC-cable with a decreased space charge accumulation. Other additions used for such polar modification of the cross-linked structure and associated reduction in space charge accumulation in the cross-linked insulation is ionomers, acrylic metal salts, carboxylic acid and acetates.

Thus it is desirous to provide an insulated DC-cable with an polymer based electrical insulation system comprising an extruded XLPE composition suitable for use as a transmission and distribution cable in networks and installations for DC transmission and distribution of electric power. The cable shall typically be produced with a process for application and processing of then extruded XLPE based insulation which can be carried out in a manner such that there is no need for any lengthy time consuming batch-treatment such as impregnation or degassing, i.e. vacuum treatment of the cable to ensure stable and consistent dielectric properties and a high and consistent electric strength of the cable insulation. The cable insulation shall further exhibit a low tendency to space charge accumulation, a high DC breakdown strength, a high impulse strength and high insulation resistance. This would offer both technical and economical advances over prior art methods as production time and production costs can be reduced and the possibility for an essentially continuous or at least semi-continuous process for the application and processing of the cable insulation system is provided. Further the reliability, the low maintenance requirements and the long working life of a conventional DC-cable, comprising an impregnated paper-based insulation, shall be maintained or improved. The replacement of an impregnated paper or cellulose based insulation with an extruded polymeric insulation shall as an extra advantage open for an increase in the electrical strength and thus allow an increase in operation voltages, improve handleability and robustness of the cable.

In particular it is desirous to provide an insulated electric DC-cable wherein the an extruded and cross-linked PE composition contained in the insulation system comprises a three dimensional cross-linked structure which exhibit trap sites for space charges, whereby the mobility of any space charges is restricted and the development of a polarized space charge profile within the extruded insulation. Such a reduction in the tendency for space charge accumulation in the insulation provides as an extra economical advantage a capability to reduce safety factors in design values used for dimensioning the cable insulation. In particular such a cable is desirous for operation under the specific conditions prevailing in a network or installation for transmission or distribution of electrical power.

### SUMMARY OF THE INVENTION

It is an object of the present invention to provide an insulated electric DC-cable that meets the desires as specified in the foregoing. This is according to the present invention achieved by a DC-cable as defined in the preamble of claim 1 having a polymer based insulation system comprising an extruded cross-linked polyethylene composition disposed around a conductor characterized by the further measures according to the characterizing part of claim 1. Further developments of the invented DC-cable are characterized by the features of the additional claims 2 to 12.

It is also an object of the present invention to provide a method for production of an insulated electric DC-cable as specified in the foregoing. This is according to the present invention achieved by a method as defined in the preamble of claim 13 for the manufacture of an insulated DC cable having a poly ner based insulation system comprising an extruded cross-linked polyethylene composition disposed around a conductor characterized by the further measures according to the characterizing part of claim 13. Further developments of the invented method are characterized by the features of the additional claims 14 to 20.

### DESCRIPTION OF THE INVENTION

In order to use extruded polyethylene or cross linked polyethylene (XLPE) as an insulation for DC cables several factors have to be taken into account. The most important issue is the space charge accumulation under DC voltage stress. The present invention accomplish such significant decrease in the space charge accumulation typically occurring in an operating DC cable by implementing a low amount of a polar co-monomer into the polyethylene chain, wherein the polar co-monomer is of the general formula:

CH₂=CR-CO-X-(CH₂)ₙ-N(CH₃)₂ or CH₂=CR-CO-O-(CH₂-CH₂O)ₘ-H

where n is equal to 2 or 3; m is equal to a number between 1 and 20;R is H or CH₃; and X is O or NH. Preferably m is equal to 1, 5, 6, or 9.

This has either been accomplished by introducing such polar co-monomer to form a segment in the chain backbone during the polymerisation or as pending side groups in a grafting operation. The amount of polar monomer in the insulation compound ranges from exceeds 0.1 % by weight of the total polymer, preferably 0.1 to 5 % by weight, and most preferred 0.5 to 1. 5 % by weight.

According to one embodiment of the invention the polar comonomer is based on metacryl amide and is of the general formula:

CH₂=C(CH₃)-CO-NH-(CH₂)ₙ-N(CH₃)₂

where n is equal to 2 or 3.

In case of n=3 the monomer is designated dimethylamino-propylmetacryl-amide (DMAPMA).

According to another second embodiment of the invention the polar comonomer is based on acryl amide and is of the general formula:

CH₂=CH-CO-NH-(CH₂)ₙ-N(CH₃)₂

where n is equal to 2 or 3.

According to one further third embodiment of the invention the polar comonomer is based on metacrylic ester and is of the general formula:

CH₂=C(CH₃)-CO-O-(CH₂)ₙ-N(CH₃)₂

where n is equal to 2 or 3.

According to one further alternative fifth embodiment of the invention the polar comonomer is based on acrylic ester and is of the general formula:

CH₂=CH-CO-O-(CH₂)ₙ-N(CH₃)₂

where n is equal to 2 or 3.

According to another alternative sixth embodiment of the invention the polar comonomer is based on metacrylic acid and oligomeric ethyleneglycol and is of the general formula:

CH₂=C(CH₃)-CO-O-(CH2-CH₂O-)ₘH

where m is equal to a number between 1 and 20, preferably m is equal to 1, 5, 6, or 9.

According to still another seventh alternative embodiment of the invention the polar comonomer is based on acrylic acid and oligomeric ethyleneglycol and is of the general formula:

CH₂=CH-CO-O-(CH₂-CH₂O-)ₘH

where m is equal to a number between 1 and 20, preferably m is equal to 1, 5, 6, or 9.

A method for production of an insulated electric DC-cable comprising the steps of;
- compounding a PE composition,
- extruding the compounded polyethylene composition, as a part of a polymer based insulation system disposed around a conductor; and
- subsequently cross-linking the PE composition into a XLPE composition is in the general manner according to the present invention carried out such that a polar co-monomer of the type described in the foregoing and having the general formula

   CH₂=CR-CO-X-(CH₂)ₙ-N(CH₃)₂ or CH₂=CR-CO-O-(CH₂-CH₂O)ₘ-H
where n is equal to 2 or 3; m is equal to a number between 1 and 20; R is H or CH₃; and X is O or NH is introduced into the XLPE composition. Preferably m is equal to 1, 5, 6, or 9.

According to one first embodiment of the method according to the present invention the polar monomer is added to the ethylene prior to or during the polymerization reaction, in this way the comonomer will be build into the backbone of the polymer and integrated with the polyethylene chain. The added amount of comonomer is of the order of 1 % by weight of the finished polymer, typically in an amount of from 0.1 to 5 % by weight of the finished polymer and more preferred in an amount of from 0.5 to 1.5 % by weight of the finished polymer.

According to another second embodiment of the method according to the present invention ethylene and the polar monomer is copolymerized in the same manner as in the method of the first embodiment except that the amount of comonomer now is higher 5 - 40 % by weight, and preferably 25 - 35 % by weight of the finished polymer. This copolymer with high amount of polar comonomer is subsequently diluted by compounding the copolymer with strait polyethylene until the average polar comonomer content is approximately 1 % by weight, typically the content is from 0.1 to 5 % by weight of the finished polymer and more preferred from 0.5 to 1.5 % by weight of the finished polymer.

According to still another third embodiment of the method according to the present invention the polar monomer is grafted on a homopolymer of ethylene. The grafting process can be performed either in a separate step after the polymerisation process or it might be executed during the extrusion and/or cross-linking of the polyethylene based cable insulation.

The number of polar groups correspond approximately to 1 polar group per 1000 carbon atoms in the polyethylene backbone

A DC cable according to the present invention with an extruded, cross linked insulation system comprising a cross-linked polyethylene composition, XLPE, with a polar monomer introduced into the XLPE exhibit considerable advantages such as;
- A substantially reduced tendency for space charge accumulation resulting in low tendency for development of a polarized space charge profile,
- An increased DC breakdown strength.
The cable according to the present invention thus offers good performance and stability of the extruded cable insulation system also when high temperatures have been employed during extrusion, cross linking or other high temperature conditioning..

It is, as always, favorable if the content of any unreacted peroxide cross-linking agent or any by products or degradation products in the extruded, XLPE composition can be minimized to further reduce any tendency for space charge. Thus the peroxide content of the PE composition to be extruded and cross-linked is less than 5 % and preferably less than 2 %. Thus a DC-cable according to the present invention is suitably adapted to meet the specific requirements for use as a DC-cable without resorting to time consuming batch treatments. The essential elimination or substantial reduction of excess peroxide remnants in the insulation of the DC-cable is advantageous considering the cost of the peroxide cross-linking agent and more important considering the fact that the peroxide cross-linking agent upon degradation is likely to form undesired by-products such as methane and cumyl alcohol, which is a source of space charges.

All these advantageous properties and improvements over prior art cables having an insulation system comprising an extruded XLPE composition, is for a DC-cable produced according to the present invention achieved without the many disadvantages associated with some prior art cables produced. The substantially reduced tendency for space charge accumulation resulting in low tendency for development of a polarized space charge profile ensures that the high DC breakdown strength of conventional DC-cables comprising an impregnated paper insulation is maintained or improved. Further the insulating properties of a DC-cable according to the present invention exhibit a general long term stability such that the working life of the cable is maintained or increased. This achieved in particular by combined implementation of a polar segment in the XLPE and the controlled processing of the PE composition prior to and during extrusion and cross-linking and the conditioning carried out in association with the extrusion and cross-linking, wherein process variables such as temperatures, pressures, processing times, atmosphere composition are controlled

The DC-cable according to the present invention offers the capability of being produced by an essentially continuous process without any time consuming batch step such as impregnation or degassing, thereby opening for substantial reduction in production time and thus the production costs without risking the technical performance of the cable.

A DC cable as defined in the foregoing is especially advantageous for operation under the specific conditions prevailing in high-voltage transmission or distribution cable used in a network or installation for transmission or distribution of electrical power, due to the improved thermal properties combined with maintained or improved electrical properties. This is especially important due to the long life such installations are designed for, and the limited access for maintenance to such installations of being installed in remote locations or even sub-sea. One further advantage for a high-voltage direct current cable produced according to the present invention is that the production time can be substantially reduced by the adoption of an essentially continuous process free from operating steps requiring batch treatment of complete cable lengths or part lengths offer cost advantages compared to conventional cables.

### BRIEF DESCRIPTION OF THE DRAWINGS

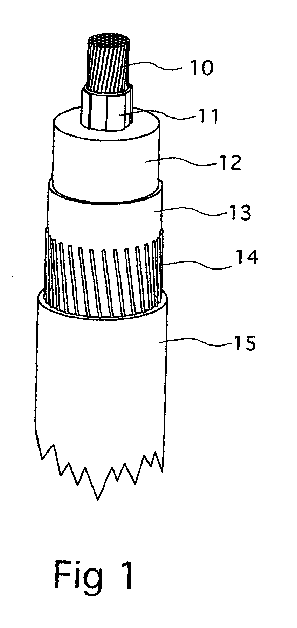

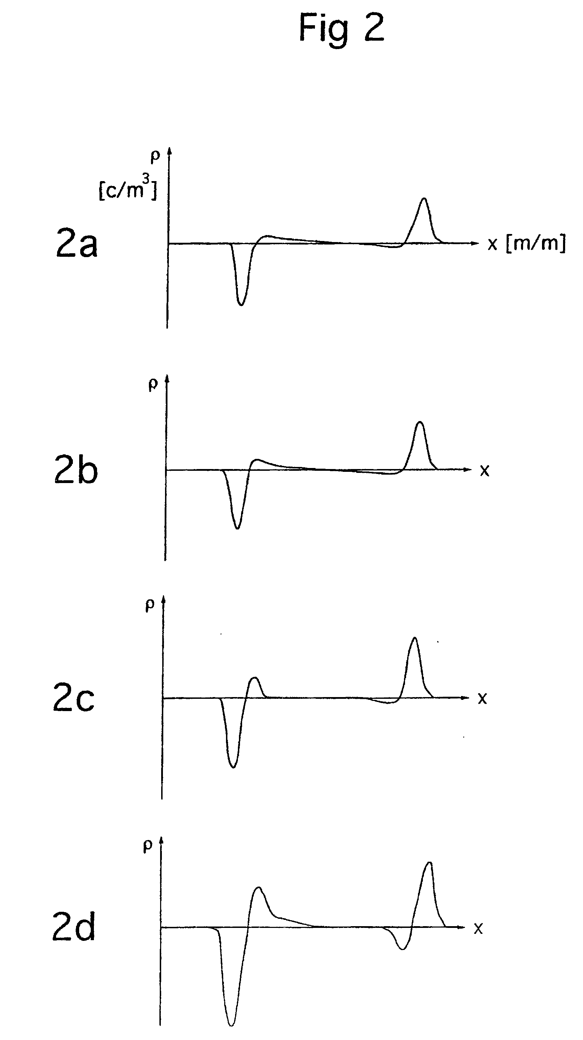

The present invention shall be described more in detail while referring to the drawings and examples. Figure 1 shows a section-view of a cable for high-voltage direct current transmission of electric power according to one embodiment of the present invention. Figures 2a to 2d show space charge recordings for comparative tests on plates with XLPE compositions as used in prior insulated AC-cables and for compositions according to the present invention.

### DESCRIPTION OF PREFERRED EMBODIMENTS, EXAMPLES.

The DC-cable according to the embodiment of the present invention shown in figure 1 comprises from the center and outwards;
- a stranded multi-wire conductor 10;
- a first extruded semi-conducting shield 11 disposed around and outside the conductor 10 and inside a conductor insulation 12;
- an extruded conductor insulation 12 with an extruded, cross-linked composition as described in the foregoing;
- a second extruded semi-conducting shield 13 disposed outside the conductor insulation 12;
- a metallic screen 14; and
- an outer covering or sheath 15 arranged outside the metallic screen 14.

The DC cable can when deemed appropriate be further complemented in various ways with various functional layers or other features. It can for example be complemented with a reinforcement in form of metallic wires outside the outer extruded shield 13, a sealing compound or a water swelling powder introduced in metal/polymer interfaces or a system of radial achieved by e.g. a corrosion resistant metal polyethylene laminate and longitudinal water sealing achieved by water swelling material, e.g. tape or powder beneath the sheath 15. The conductor need not be stranded but can be of any desired shape and constitution, such as a stranded multi-wire conductor, a solid conductor or a segmental conductor

### EXAMPLE 1

### Comparative tests

Test plates with XLPE compositions as used in prior art insulated AC-cables and in accordance with the present invention for use in insulated DC-cables were produced, processed and subjected to an evaluation of the tendency for space charge accumulation by recording space charge profiles using the Pulsed ElectroAccoustic (PEA) technique. The PEA technique is well known within the art and described by Takada et al. in IEEE Trans. Electr. Insul. Vol. EI-22(No.4). pp 497-501(1987).
a, A polyethylene composition was prepared by adding about 1 % by weight of dimethylamino-propylmetacryl-amide, DMAPMA to about 99 % by weight of low density polyethylene composition, wherein this PE composition comprised about 98 % by weight of low density polyethylene (922 kg/m³) with a melt flow rate of 0,8 g/10 min and about 2 % by weight of a conventional system of antioxidant and peroxide cross-linking agent.
   A 2 mm thick test plate of a this prepared polyethylene was molded at 130°C, whereafter, two semi-conductive electrodes were molded on the test plate and the assembly was cross-linked in an electric press at 180°C for 15 minutes.
   The 2 mm thick cross-linked test plate was subsequently tested at 50°C in a device for PEA analysis were the plate was inserted between two flat electrodes and subjected to a 40 kV direct voltage electric field. That is one electrode was grounded and the other electrode was held at a voltage potential of + 40kV. The space charge profile as shown in figure 2a was recorded for the test plate. Were arbitrary units for space charge/volume is presented as a function of the test plate thickness, i.e. 0 is at the grounded electrode and x indicates the distance from the grounded electrode in the direction towards the + 40 kV electrode.
b, A 2 mm thick test plate of a the same polyethylene composition comprising DMAPMA as prepared in comparative example a was molded, also at 130°C. Two semi-conductive electrodes were molded on this test plate and the assembly was cross-linked in an electric press at 250°C for 30 minutes.
   The 2 mm thick cross-linked test plate was subsequently tested at 50°C in a device for PEA analysis were the plate was inserted between two flat electrodes and subjected to a 40 kV direct voltage electric field. That is one electrode was grounded and the other electrode was held at a voltage potential of + 40kV. The space charge profile as shown in figure 2b was recorded for the test plate. Where arbitrary units for space charge/volume is presented as a function of the test plate thickness, i.e. 0 is at the grounded electrode and x indicates the distance from the grounded electrode in the direction towards the + 40 kV electrode.
c, A 2 mm thick test plate of a conventional polyethylene composition comprising as used in examples a and b but without the DMAPMA was molded at 130°C.
   Two semi-conductive electrodes were molded on the test plate and the assembly was cross-linked in an electric press at 180°C for 15 minutes.
   The 2 mm thick cross-linked test plate was subsequently tested at 50°C in a device for PEA analysis were the plate was inserted between two flat electrodes and subjected to a 40 kV direct voltage electric field. That is one electrode was grounded and the other electrode was held at a voltage potential of + 40kV. The space charge profile as shown in figure 2c was recorded for the test plate. Where arbitrary units for space charge/volume is presented as a function of the test plate thickness, i.e. 0 is at the grounded electrode and x indicates the distance from the grounded electrode in the direction towards the + 40 kV electrode.
d, A 2 mm thick test plate of a polyethylene composition as in example c was molded at 130°C.

Two semi-conductive electrodes were molded on the test plate and the assembly was cross-linked in an electric press at 250°C for 30 minutes.

The 2 mm thick cross-linked test plate was subsequently tested at 50°C in a device for PEA analysis were the plate was inserted between two flat electrodes and subjected to a 40 kV direct voltage electric field. That is one electrode was grounded and the other electrode was held at a voltage potential of + 40kV. The space charge profile as shown in figure 2d was recorded for the test plate. Where arbitrary units for space charge/volume is presented as a function of the test plate thickness, i.e. 0 is at the grounded electrode and x indicates the distance from the grounded electrode in the direction towards the + 40 kV electrode.

### CONCLUSIONS OF COMPARATIVE TESTS

The space charge profiles of the samples in example 1a, 1b, 1c, and 1d were recorded 3 hours after the application of the DC voltage, the results are shown in figures 2a, 2b, 2c, and 2d, respectively. It can clearly be seen that the space charge accumulation in the insulation material traditionally used in AC XLPE cables (see figure 2c and 2d) is high and that the tendency for space charge accumulation is substantially reduced for the two compositions according to the present invention represented with comparative examples figures 2a and 2b.

## Claims

1. An insulated electric DC-cable having an polymer based insulation system comprising an extruded and cross-linked polyethylene, XLPE, based composition, disposed around a conductor, **characterized in that** the XLPE based composition comprises a polar modification in the form of a polar segment comprising a polar co-monomer having the general formula:
CH₂=CR-CO-X-(CH₂)ₙ-N(CH₃)₂ or CH₂=CR-CO-O-(CH₂-CH₂O)ₘ-H
where n is equal to 2 or 3; m is equal to a number from 1 to 20; R is H or CH₃; and X is O or NH.

2. A DC cable according to claim 1, **characterized in** the polar co-monomer is present as moieties in the chain backbone of the XLPE

3. A DC cable according to claim 1, **characterized in** the polar co-monomer is present as side-groups grafted on to the XLPE.

4. A DC cable according to any of claims 1, 2 or 3, **characterized in that** the polar monomer is present in the XLPE composition in an amount exceeding 0.1 % by weight.

5. A DC cable according to any of claims 4, **characterized in that** the polar monomer is present in the XLPE composition in an amount of from 0.5 to 1.5 % by weight of the total polymer.

6. A DC cable according to any of the preceding claims, **characterized in that** the polar monomer is a polar comonomer based on metacryl amide and that it is of the general formula:
CH₂=C(CH₃)-CO-NH-(CH₂)ₙ-N(CH₃)₂
where n is equal to 2 or 3.

7. A DC cable according to claim 6 **characterized in that** n=3 and the polar monomer is dimethylamino-propylmetacryl-amide (DMAPMA).

8. A DC cable according to any of the claims 1 to 5, **characterized in that** the polar monomer is based on acryl amide and that it is of the general formula:
CH₂=CH-CO-NH-(CH₂)ₙ-N(CH₃)₂
where n is equal to 2 or 3.

9. A DC cable according to any of the claims 1 to 5, **characterized in that** the polar monomer is based on metacrylic ester and that it is of the general formula:
CH₂=C(CH₃)-CO-O-(CH₂)n-N(CH₃)₂
where n is equal to 2 or 3.

10. A DC cable according to any of the claims 1 to 5, **characterized in that** the polar monomer is based on acrylic ester and that it is of the general formula:
CH₂=CH-CO-O-(CH₂)n-N(CH₃)₂
where n is equal to 2 or 3.

11. A DC cable according to any of the claims 1 to 5, **characterized in that** the polar monomer is based on metacrylic acid and oligomeric ethyleneglycol and that it is of the general formula:
CH₂=C(CH₃)-CO-O-(CH₂-CH₂O-)ₘH
where m is equal to a number from 1 to 20, preferably n is equal to 1, 5, 6, or 9.

12. A DC cable according to any of the claims 1 to 5, **characterized in that** the polar monomer is based on acrylic acid and oligomeric ethyleneglycol and that it is of the general formula:
CH₂=CH-CO-O-(CH₂-CH₂O-)ₘH
where m is equal to a number from 1 to 20, preferably n is equal to 1, 5, 6, or 9.

13. A method for production of an insulated electric DC-cable comprising the steps of compounding a PE composition, extruding said compounded polyethylene composition, as a part of a polymer based insulation system disposed around a conductor and subsequently cross-linking the PE composition into a XLPE composition, **characterized in that** a polar comonomer having the general formula:
CH₂=CR-CO-X-(CH₂)ₙ-N(CH3)₂ or CH₂=CR-CO-O-(CH₂-CH₂O)ₘ-H
where n is equal to 2 or 3; m is equal to a number from 1 to 20; R is H or CH₃;
and X is O or NH, is introduced into the XLPE composition .

14. A method according to claim 13, **characterized in that** the polar monomer is integrated into the polyethylene chain.

15. A method according to claim 13 or 14, **characterized in that** the polar monomer is added to the ethylene prior to or during the polymerization reaction and that the polar comonomer subsequently is introduced as moieties into the chain backbone of the XLPE during polymerization reaction.

16. A method according to claim 15, **characterized in that** the polar co-monomer is added in an amount of from 0.1 % to 5 % by weight of the finished polymer.

17. A method according to claim 15, **characterized in that** the polar co-monomer is added in an amount of from 5 to 40 % by weight of the finished polymer and that the high amount of polar comonomer is subsequently diluted by compounding the copolymer with straight polyethylene until the average polar comonomer content is from 0.1 % to 5 % by weight.

18. A method according to claim 13 or 14, **characterized in that** the polar monomer is grafted on a homopolymer of ethylene.

19. A method according to claim 18, **characterized in that** the polar monomer is grafted on a homopolymer of ethylene in a separate step after the polymerisation process.

20. A method according to claim 18, **characterized in that** the polar monomer is grafted on a homopolymer of ethylene during the extrusion and/or crosslinking of the polyethylene based cable insulation.

## Patentansprüche

1. Isoliertes elektrisches DC Kabel mit einem Isolierungssystem auf Polymerbasis, umfassend eine Zusammensetzung auf Basis eines extrudierten und vernetzten Polyethylens, XLPE, die um einen elektrischen Leiter angeordnet ist, **dadurch gekennzeichnet, dass** die Zusammensetzung auf XLPE Basis eine Polarmodifikation in der Form eines polaren Segmentes, umfassend ein polares Comonomer mit der allgemeinen Formel:
CH₂=CR-CO-X-(CH₂)ₙ-N(CH₃)₂ oder CH₂=CR-CO-O-(CH₂-CH₂O)ₘ-H
wobei n 2 oder 3 ist, m eine Zahl von 1 bis 20 ist, R H oder CH₃ ist und X O oder NH ist, umfasst.

2. DC Kabel nach Anspruch 1, **dadurch gekennzeichnet, dass** das polare Comonomer als Teile in der XLPE Hauptkette vorhanden ist.

3. DC Kabel nach Anspruch 1, **dadurch gekennzeichnet, dass** das polare Comonomer als Seitengruppen vorhanden ist, die an das XLPE anpolymerisiert sind.

4. DC Kabel nach einem der Ansprüche 1, 2 oder 3, **dadurch gekennzeichnet, dass** das polare Monomer in der XLPE Zusammensetzung in einer Menge vorhanden ist, die 0,1 Gew.-% überschreitet.

5. DC Kabel nach Anspruch 4, **dadurch gekennzeichnet, dass** das polare Monomer in der XLPE Zusammensetzung in einer Menge 0,5 bis 1,5 Gew.-% des Gesamtpolymers vorhanden ist.

6. DC Kabel nach einem der vorhergehenden Ansprüche, **dadurch gekennzeichnet, dass** das polare Monomer ein polares Comonomer auf Basis von Methacrylamid ist und dass es die allgemeine Formel hat:
CH₂=C(CH₃)-CO-NH-(CH₂)ₙ-N(CH₃)₂,
wobei n 2 oder 3 entspricht.

7. DC Kabel nach Anspruch 6, **dadurch gekennzeichnet, dass** n = 3 und das polare Monomer Dimethylaminopropylmethacrylamid (DMAPMA) ist.

8. DC Kabel nach einem der Ansprüche 1 bis 5, **dadurch gekennzeichnet, dass** das polare Monomer auf Acrylamid basiert und dass es die allgemeine Formel hat :
CH₂=CH-CO-NH-(CH₂)ₙ-N(CH₃)₂,
wobei n 2 oder 3 entspricht.

9. DC Kabel nach einem der Ansprüche 1 bis 5, **dadurch gekennzeichnet, dass** das polare Monomer auf Methacrylester basiert und dass es die allgemeine Formel hat:
CH₂=C(CH₃)-CO-NH-(CH₂)ₙ-N(CH₃)₂,
wobei n 2 oder 3 entspricht.

10. DC Kabel nach einem der Ansprüche 1 bis 5, **dadurch gekennzeichnet, dass** das polare Monomer auf Acrylester basiert und dass es die allgemeine Formel hat:
CH₂=CH-CO-O- (CH₂)ₙ-N(CH₃)₂,
wobei n 2 oder 3 entspricht.

11. DC Kabel nach einem der Ansprüche 1 bis 5, **dadurch gekennzeichnet, dass** das polare Monomer auf Methacrylsäure und oligomerem Ethylenglycol basiert und dass es die allgemeine Formel hat:
CH₂=C(CH₃)-CO-O-(CH₂-CH₂O)ₘH,
wobei m einer Zahl von 1 bis 20 entspricht, bevorzugt ist m 1, 5, 6 oder 9.

12. DC Kabel nach einem der Ansprüche 1 bis 5, **dadurch gekennzeichnet, dass** das polare Monomer auf Acrylsäure und oligomerem Ethylenglycol basiert und dass es die allgemeine Formel hat:
CH₂=CH-CO-O-(CH₂-CH₂O)ₘH,
wobei m einer Zahl von 1 bis 20 entspricht, bevorzugt ist m 1, 5, 6 oder 9.

13. Verfahren zur Herstellung eines isolierten elektrischen DC Kabels, umfassend die Schritte: Mischen einer PE-Zusammensetzung, Extrudieren dieser vermischten Polyethylenzusammensetzung als Teil eines Isolierungssystems auf Polymerbasis, die um einen elektrischen Leiter angeordnet ist, und anschließendes Vernetzen der PE-Zusammensetzung in eine XLPE-Zusammensetzung, **dadurch gekennzeichnet, dass** ein polares Comonomer mit der allgemeinen Formel
CH₂=CR-CO-X- (CH₂)ₙ-N(CH₃)₂ oder CH₂=CR-CO-O-(CH₂-CH₂O)ₘ-H ,
wobei n 2 oder 3 ist, m einer Zahl von 1 bis 20 entspricht, R H oder CH₃ ist und X O oder NH ist, in eine XLPE-Zusammensetzung eingeführt wird.

14. Verfahren nach Anspruch 13, **dadurch gekennzeichnet, dass** das polare Monomer in die Polyethylenkette integriert wird.

15. Verfahren nach Anspruch 13 oder 14, **dadurch gekennzeichnet, dass** das polare Monomer vor oder während der Polymerisierungsreaktion zu dem Ethylen gegeben wird und dass das polare Comonomer anschließend während der Polymerisierungsreaktion als Teil in die XLPE-Hauptkette eingeführt wird.

16. Verfahren nach Anspruch 15, **dadurch gekennzeichnet, dass** das polare Comonomer in einer Menge von 0,1 bis 5 Gew.-% des Endpolymers zugegeben wird.

17. Verfahren nach Anspruch 15, **dadurch gekennzeichnet, dass** das polare Comonomer in einer Menge von 5 bis 40 Gew.-% des Endpolymers zugegeben wird und dass die größte Menge des polaren Comonomers anschließend verdünnt wird durch Mischen des Copolymers mit geradem Polyethylen, bis der durchschnittliche polare Comonomergehalt von 0,1 bis 5 Gew.-% ist.

18. Verfahren nach Anspruch 13 oder 14, **dadurch gekennzeichnet, dass** das polare Monomer an ein Ethylen-Homopolymer polymerisiert wird.

19. Verfahren nach Anspruch 18, **dadurch gekennzeichnet, dass** das polare Monomer an ein Ethylen-Homopolymer in einem getrennten Schritt nach dem Polymerisierungsverfahren polymerisiert wird.

20. Verfahren nach Anspruch 18, **dadurch gekennzeichnet, dass** das polare Monomer an ein Ethylen-Homopolymer während der Extrusion und/oder Vernetzung der Kabelisolierung auf Polyethylenbasis polymerisiert wird.

## Revendications

1. Câble électrique isolé pour courant continu comprenant un système isolant à base d'un polymère, comprenant une composition à base d'un polyéthylène extrudé et réticulé, XLPE, disposé autour d'un conducteur, **caractérisé en ce que** la composition à base de XLPE comprend une modification polaire sous forme d'un segment polaire comprenant un comonomère polaire répondant à la formule générale :
CH₂=CR-CO-X-(CH₂)ₙ-N(CH₃)₂ ou CH₂=CR-CO-O-(CH₂-CH₂O)ₘ-H
dans laquelle n est égal à 2 ou 3 ; m est égal à un nombre de 1 à 20 ; R représente H ou un groupe CH₃ ; et X représente O ou un groupe NH.

2. Câble pour courant continu suivant la revendication 1, **caractérisé en ce que** le comonomère polaire est présent sous forme de groupements dans le squelette de chaîne du XLPE.

3. Câble pour courant continu suivant la revendication 1, **caractérisé en ce que** le comonomère polaire est présent sous forme de groupes latéraux greffés sur le XLPE.

4. Câble pour courant continu suivant l'une quelconque des revendications 1, 2 et 3, **caractérisé en ce que** le monomère polaire est présent dans la composition de XLPE en une quantité supérieure à 0,1 % en poids.

5. Câble pour courant continu suivant la revendication 4, **caractérisé en ce que** le monomère polaire est présent dans la composition de XLPE en une quantité de 0,5 à 1,5 % en poids du polymère total.

6. Câble pour courant continu suivant l'une quelconque des revendications précédentes, **caractérisé en ce que** le monomère polaire est un comonomère polaire à base de métacrylamide et **en ce qu'**il répond à la formule générale :
CH₂=C(CH₃)-CO-NH-(CH₂)ₙ-N(CH₃)₂
dans laquelle n est égal à 2 ou 3.

7. Câble pour courant continu suivant la revendication 6, **caractérisé en ce que** n est égal à 3 et le monomère polaire est le diméthylaminopropylmétacrylamide (DMAPMA).

8. Câble pour courant continu suivant l'une quelconque des revendications 1 à 5, **caractérisé en ce que** le monomère polaire est à base d'acrylamide et **en ce qu'**il répond à la formule générale :
CH₂=CH-CO-NH-(CH₂)ₙ-N(CH₃)₂
dans laquelle n est égal à 2 ou 3.

9. Câble pour courant continu suivant l'une quelconque des revendications 1 à 5, **caractérisé en ce que** le monomère polaire est à base d'ester métacrylique et **en ce qu'**il répond à la formule générale :
CH₂=C (CH₃)-CO-O-(CH₂)ₙ-N(CH₃)₂
dans laquelle n est égal à 2 ou 3.

10. Câble pour courant continu suivant l'une quelconque des revendications 1 à 5, **caractérisé en ce que** le monomère polaire est à base d'ester acrylique et **en ce qu'**il répond à la formule générale :
CH₂=CH-CO-O-(CH₂)ₙ-N (CH₃)₂
dans laquelle n est égal à 2 ou 3.

11. Câble pour courant continu suivant l'une quelconque des revendications 1 à 5, **caractérisé en ce que** le monomère polaire est à base d'acide métacrylique et d'éthylèneglycol oligomère et **en ce qu'**il répond à la formule générale :
CH₂=C(CH₃)-CO-O-(CH₂-CH₂O-)ₘH
dans laquelle m est égal à un nombre de 1 à 20 ; de préférence m est égal à 1, 5, 6 ou 9.

12. Câble pour courant continu suivant l'une quelconque des revendications 1 à 5, **caractérisé en ce que** le monomère polaire est à base d'acide acrylique et d'éthylèneglycol oligomère et **en ce qu'**il répond à la formule générale :
CH₂=CH-CO-O-(CH₂-CH₂O-)ₘH
dans laquelle m est égal à un nombre de 1 à 20 ; de préférence m est égal à 1, 5, 6 ou 9.

13. Procédé pour la production d'un câble électrique isolé pour courant continu, comprenant les étapes consistant à formuler une composition de PE, à extruder ladite composition de polyéthylène formulée, en tant qu'une partie d'un système isolant à base d'un polymère disposé autour d'un conducteur, puis à réticuler la composition de PE en une composition de XLPE, **caractérisé en ce qu'**un comonomère polaire répondant à la formule générale :
CH₂=CR-CO-X- (CH₂)ₙ-N(CH₃)₂ Ou CH₂=CR-CO-O-(CH₂-CH₂O)ₘ-H
dans laquelle n est égal à 2 ou 3 ; m est égal à un nombre de 1 à 20 ; R représente H ou un groupe CH₃ ; et X représente O ou un groupe NH, est introduit dans la composition de XLPE.

14. Procédé suivant la revendication 13, **caractérisé en ce que** le monomère polaire est intégré à la chaîne du polyéthylène.

15. Procédé suivant la revendication 13 ou 14, **caractérisé en ce que** le monomère polaire est ajouté à l'éthylène avant ou pendant la réaction de polymérisation et **en ce que** le comonomère polaire est ensuite introduit sous forme de groupements dans le squelette de chaîne du XLPE au cours de la réaction de polymérisation.

16. Procédé suivant la revendication 15, **caractérisé en ce que** le comonomère polaire est ajouté en une quantité de 0,1 % à 5 % en poids du polymère fini.

17. Procédé suivant la revendication 15, **caractérisé en ce que** le comonomère polaire est ajouté en une quantité de 5 à 40 % en poids du polymère fini et **en ce que** la grande quantité de comonomère polaire est ensuite diluée en mélangeant le copolymère à un polyéthylène droit jusqu'à ce que la teneur moyenne en comonomère polaire soit comprise dans l'intervalle de 0,1 % à 5 % en poids.

18. Procédé suivant la revendication 13 ou 14, **caractérisé en ce que** le monomère polaire est greffé sur un homopolymère d'éthylène.

19. Procédé suivant la revendication 18, **caractérisé en ce que** le monomère polaire est greffé sur un homopolymère d'éthylène dans une étape distincte après le procédé de polymérisation.

20. Procédé suivant la revendication 18, **caractérisé en ce que** le monomère polaire est greffé sur un homopolymère d'éthylène au cours de l'extrusion et/ou de la réticulation de l'isolant de câble à base de polyéthylène.
